# EUROPÄISCHE PATENTSCHRIFT

(11) **EP 0 861 482 B1**
(45) Veröffentlichungstag und Bekanntmachung des Hinweises auf die Patenterteilung: **22.08.2001**
(21) Anmeldenummer: 96945998.1
(22) Anmeldetag: 14.11.1996
(51) Int. Cl.: G08G 1/00

(54) **VERFAHREN UND ZIELFÜHRUNGSEINHEIT ZUR SICHEREN ZIELFÜHRUNG EINES FAHRZEUGS**
PROCESS AND GUIDANCE SYSTEM FOR ENSURING RELIABLE GUIDANCE OF A VEHICLE
PROCEDE ET UNITE POUR LE GUIDAGE FIABLE D'UN VEHICULE

(30) Priorität: 14.11.1995 DE 19544157; 15.11.1995 DE 19544381; 15.11.1995 DE 19544382
(43) Veröffentlichungstag der Anmeldung: 02.09.1998
(73) Patentinhaber: MANNESMANN Aktiengesellschaft, 40213 Düsseldorf (DE)
(72) Erfinder: ALBRECHT, Uwe, D-80807 München (DE); GARTHWAITE, Paul, D-85598 Baldham (DE); WAIZMANN, Gerd, D-83083 Riedering (DE)
(74) Vertreter: Presting, Hans-Joachim, Dipl.-Ing.
(86) Internationale Anmeldenummer: DE9602225
(87) Internationale Veröffentlichungsnummer: WO9718544

(56) Entgegenhaltungen:
- EP-A- 0 272 077
- EP-A- 0 349 652
- EP-A- 0 379 198
- DE-A- 3 608 658
- DE-A- 4 300 927

## Beschreibung

Die Erfindung betrifft ein Verfahren und eine Zielführungseinheit zur sicheren Zielführung eines Fahrzeugs entlang einer zu einer vorgegebenen Zielposition führenden Fahrtroute, bei dem die momentane Ortsposition des Fahrzeugs ermittelt und eine Fahrtroute, die in Form von aufeinanderfolgenden Wegpunkten, die mindestens die geografischen Ortskoordinaten umfassen, bestimmt und dem Fahrer des Fahrzeugs in Form von Fahrhinweisen angezeigt wird, wobei ein Verlassen der vorgegebenen Fahrtroute signalisiert wird, sobald ein entsprechendes vorgegebenes Entscheidungskriterium erfüllt ist.

Fahrzeugleit- und Zielführungssysteme mit optischen und/oder akustischen Ausgabeeinrichtungen für entsprechende Fahrhinweise zur Führung eines Fahrzeugs entlang einer ermittelten günstigen Fahrtroute zu einem vorgegebenen Ziel sind bekannt; sie dienen dazu, beispielsweise dem ortsunkundigen Fahrzeugführer anhand von im Fahrzeug oder extern abgelegten digitalisierten Straßenkarten z.B. die aktuelle geografische Position, die Fahrtroute sowie alle bevorstehenden Richtungsänderungen in Form von Fahrhinweisen anzuzeigen.

Aus der DE 4039887 A1 ist ein Verfahren bekannt, bei dem die aktuelle Ortsposition mittels eines im Fahrzeug installierten Ortungssystems bestimmbar ist und eine von mindestens einem externen Rechner eines Off-Board-Navigationssystems ermittelte von der aktuellen Ortsposition zu einer vorgegebenen Zielposition führende Fahrtroute als Folge zu passierender Straßenabschnitte (sogenannte Leitvektorkette) zusammen mit einem Straßenplan der näheren Umgebung an das Fahrzeug übertragen und auf einem Display zur Anzeige gebracht wird, wobei die externen Rechner in räumlich verteilt angeordnete Baken installiert sind und zusätzlich mit einem Verkehrsrechner verbunden sein können. Die Leitvektorkette umfaßt die Ortskoordinaten der zu passierenden Straßenabschnitte und ermöglicht es folglich, diese Ortskoordinaten mit der aktuellen Ortsposition des Fahrzeugs zu vergleichen und anhand des Ergebnisses dem Fahrer beispielsweise die aktuelle Ortsposition auf dem Display zusammen mit Fahrhinweisen anzuzeigen und ihn somit sukzessiv zur vorgegebene Zielposition zu führen. Die Zielführung erfolgt bei diesem Verfahren also immer ausgehend von der momentanen Ortsposition, unabhängig davon, ob das Fahrzeug von der vorgegebenen Fahrtroute abgewichen ist oder nicht.

Dieses Verfahren ist zwar zum Zielführen eines Fahrzeugs insbesondere mit Hilfe eines Off-Board-Navigationssysterns geeignet, jedoch werden Abweichungen von der Fahrtroute nicht ermittelt und dem Fahrer folglich auch nicht mitgeteilt. Bei diesem Verfahren wird lediglich beim Passieren einer Bake vom Rechner in Abhängigkeit von der aktuellen Ortsposition des Fahrzeugs (oder der Bake) jeweils mindestens eine zum Ziel führende Leitvektorkette aus einem Leitvektorketten-Kollektiv ausgewählt, an das Fahrzeug übertragen, dem Fahrer direkt oder in Form von Fahrhinweisen angezeigt und auf diese Weise bei Abweichungen von der ursprünglich Fahrtroute eine "Fehlerkorrektur" vorgenommen.

Aus der DE 36 45 100 C2 ist ein Navigationssystem für Kraftfahrzeuge bekannt, das einen mitgeführten Landkartenspeicher vorsieht und bei dem die Fahrtroute als eine Folge sogenannter "hervorgehobener" Punkte vorgegeben wird. Dieses System verfügt über fahrzeugseitige Sensoren, mit denen einerseits die Fahrtrichtung und andererseits die zurückgelegte Wegstrecke des Fahrzeugs erfaßt werden können. Dadurch ist das System in der Lage, die geometrische Form des zurückgelegten Weges nachzubilden, so daß ausgehend von einem Anfangspunkt die jeweilige momentane Ortsposition des Fahrzeugs ermittelt werden kann. Durch die begrenzte Genauigkeit der Datenermittlung kommt es unvermeidbar zu einer fortlaufenden Aufsummierung von Fehlergrößen. Um diesen Fehler in der momentanen Ortsposition nicht in unkontrollierbare Größenordnungen anwachsen zu lassen, sieht dieses Navigationssystem vor, daß bei Erreichen eines neuen "hervorgehobenen" Wegpunktes die Daten der rechnerischen Ortsposition ersetzt werden durch die tatsächlichen Ortspositionsdaten des erreichten Wegpunktes. Ob ein solcher neuer Wegpunkt tatsächlich erreicht worden ist, kann hierbei dadurch erkannt werden, daß jeweils die Länge der Wegstrecke zwischen zwei aufeinanderfolgenden "hervorgehobenen" Wegpunkten (also die Straßenentfernung) im Landkartenspeicher im Sinne eines Sollwertes verzeichnet ist und der tatsächlich vom Fahrzeug zurückgelegte Weg zwischen zwei solchen Wegpunkten jeweils fortlaufend von diesem Sollwert subtrahiert wird. Wenn sich die so gebildete Differenz dem Wert Null nähert, müßte die "aufsummierte" Ortsposition der durch den Landkartenspeicher vorgegebenen Ortsposition des angesteuerten Wegpunktes entsprechen. Sollte sich hierbei aber eine unzulässig große Differenz ergeben, gibt das System einen Warnhinweis aus, daß die vorgegebene Route verlassen wurde. Eine solche Warnung ist auch vorgesehen, sobald die "aufsummierte" Ortsposition des Fahrzeugs während der Fahrt zwischen den benachbarten beiden "hervorgehobenen" Wegpunkten eine um diese Wegpunkte herum definierte Fehlerzone verläßt. Die Form dieser Fehlerzone ist im wesentlichen rechteckig ausgebildet, wobei ihre Breite (quer zum Straßenverlauf) halb so groß ist wie der lineare Abstand zwischen den beiden Wegpunkten. Im Falle eines unplanmäßigen Abbiegemanövers kann dieses System aufgrund der relativ breiten Fehlerzone zwischen den aufeinanderfolgenden Wegpunkten eingetretene Abweichungen von der vorgesehenen Fahrtroute vielfach erst sehr spät erkennen, also beispielsweise erst dann, wenn der nächste Wegpunkt an sich hätte erreicht worden sein müssen.

Die EP 0 272 077 A2 offenbart, bei der Zielführung eines Fahrzeuges entlang einer durch eine Mehrzahl von Punkten definierten Route für die Darstellung auf einer Karte im Fahrzeug zuverlässig zu detektieren, ob ein Fahrzeug einen Routenpunkt bereits durchfahren hat, indem fortlaufend die Fahrzeugdistanz zu einem Routenpunkt bestimmt wird und dabei, wenn nach einer Distanzabnahme eine Distanzzunahme von einem vorherigen, bereits passierten Routenpunkt erfolgt, anzunehmen, daß dieser passiert wurde. Ein Abweichen von einer Fahrtroute wird hierdurch nicht festgestellt.

Es ist **Aufgabe** der vorliegenden Erfindung, ein Verfahren zur sicheren Zielführung eines Fahrzeugs entlang einer insbesondere mit Hilfe eines Off-Board-Navigationssystems ermittelten günstigen Fahrtroute und eine Zielführungseinheit zur Durchführung des Verfahrens anzugeben, bei dem mit möglichst geringem technischen Aufwand Abweichungen von der vorgegebenen Fahrtroute im Fahrzeug möglichst schnell erkannt werden, ohne daß dafür eine digitale Straßenkarte und dergleichen im Fahrzeug mitgeführt werden muß.

Die **Lösung** dieser Aufgabe sieht nach der vorliegenden Erfindung vor, daß die Fahrtroute zunächst in Form von aufeinanderfolgenden Wegpunkten bestimmt wird. Im Fahrzeug wird die momentane Ortsposition des Fahrzeugs fortlaufend anhand von Daten oder Signalen bestimmt, die auf drahtlosem Wege an das Fahrzeug übermittelt werden. Anhand der jeweils ermittelten momentanen Ortsposition des Fahrzeugs wird dann fortlaufend der lineare Abstand von dem Wegpunkt, den das Fahrzeug als nächsten auf seiner Fahrtroute passieren soll, berechnet und mit einem vorgegebenen Minimalwert verglichen, der anfänglich dem linearen Abstand (Luftlinie) der jeweiligen unmittelbar aufeinanderfolgenden Wegpunkte entspricht. Dieser Wert kann sich (insbesondere bei kurvenreichen Strecken) deutlich von der tatsächlichen Länge der Wegstrecke zwischen diesen Wegpunkten unterscheiden. Der Minimalwert wird jeweils durch den berechneten linearen Abstand ersetzt, wenn der lineare Abstand kleiner ist als der bisherige Minimalwert. Ein Verlassen der vorgegebenen Fahrtroute wird dem Fahrer signalisiert, wenn der berechnete lineare Abstand um einen vorgegebenen Schwellenwert größer als der aktuelle Minimalwert ist. Sobald der nächst Wegpunkt erreicht ist, wird in entsprechender Weise als anfänglicher Minimalwert für den nächsten Streckenabschnitt der lineare Abstand bis zum übernächsten Wegpunkt gesetzt.

Das erfindungsgemäße Verfahren ermöglicht es, Abweichungen von einer vorgegebenen Fahrtroute mit geringem technischen Aufwand sofort zu erkennen und dem Fahrer anzuzeigen, ohne daß dazu eine digitale Straßenkarte mit entsprechender Auflösung im Fahrzeug mitgeführt werden muß. Die Zielführungseinheit im Fahrzeug kann insbesondere dann sehr einfach aufgebaut sein, wenn die Fahrtroute mit Hilfe eines Off-Board-Navigationssystems ermittelt und in Form von Wegpunkten an das Fahrzeug übertragen wird. So braucht die Zielführungseinheit in einem solchen Falle nur über eine Ein- und Ausgabeeinheit, eine Ortungssensorik und eine Datenkommunikationseinrichtung zu verfügen. Zweckmäßigerweise umfassen die Wegpunkte der Fahrtroute mindestens die geographischen Ortskoordinaten, so daß ein direkter Vergleich mit den Ortspositionsdaten des Fahrzeugs möglich ist.

Erfolgt die Zielführung durch ein Off-Board-Navigationssystem, indem dieses eine günstige Fahrtroute bestimmt und in Form von Wegpunkten an das Fahrzeug überträgt, so wird mit dem erfindungsgemäßen einfachen Verfahren eine besonders sichere Zielführung erzielt, da eine Falschfahrt im Fahrzeug sofort erkannt wird, wobei das Falschfahren bereits sehr kurzzeitig nach Einschlagen einer falschen Fahrtroute erkennbar und danach korrigierbar ist. Eine besonders hohe Sicherheit bei der Falschfahrerkennung läßt sich dann erzielen, wenn das erfindungsgemäße Verfahren mit einem auf anderen Prinzipien beruhenden Verfahren zur Falschfahrerkennung kombiniert wird, indem z.B. in bestimmten vorgegebenen Streckenabschnitten jeweils das eine oder das andere Verfahren benutzt wird, je nach dem welches für die Charakteristik des Streckenabschnitts am besten geeignet ist.

Eine der Erfindung gemäße Zielführungseinheit zur sicheren Zielführung eines Fahrzeugs, die das Verlassen einer vorgegebenen Fahrtroute sofort erkennt, umfaßt eine Eingabeeinrichtung insbesondere zur Eingabe einer Zielposition und eine Ortspositionsermittlungseinrichtung zur Erfassung der momentanen Ortsposition, wobei die Ortspositionsermittlungseinrichtung auf die Verarbeitung von Daten oder Signalen zur Bestimmung der Ortsposition, die von außen auf drahtlosem Wege an das Fahrzeug übertragen werden, eingerichtet ist. Eine die momentane Ortsposition und die Zielposition verbindende Fahrtroute, die im Fahrzeug durch die Zielführungseinheit oder außerhalb des Fahrzeugs ermittelbar ist, ist in einem Speicher der Zielführungseinheit in Form von Wegpunkten abgelegt. Eine vorgesehene Abstandsbestimmungs-/Vergleichseinrichtung ermöglicht fortlaufend die Bestimmung des linearen Abstands der momentanen Ortsposition von dem Wegpunkt, den das Fahrzeug als nächsten auf seiner Fahrtroute passieren soll, und den Vergleich mit einem vorgegebenen Minimalwert. Wenn der berechnete Abstand um einen vorgegebenen Schwellenwert größer als der Minimalwert ist, ist durch die Abstandsbestimmungs-/Vergleichseinrichtung ein Warnsignal auslösbar, das beispielsweise dem Fahrer des Fahrzeugs das Verlassen der vorgegebenen Fahrtroute signalisiert oder aber es werden durch ein entsprechendes Signal Maßnahmen zur Fahrtroutenkorrektur ausgelöst. Dagegen wird nach einem Vergleich der vorgegebene Minimalwert durch den Abstand ersetzt, wenn der jeweils ermittelte Abstand kleiner als der Minimalwert ist, d.h. unter dieser Bedingung wird der zuletzt ermittelte Abstand zum neuen Minimalwert.

Zur differenzierteren Berücksichtigung beispielsweise der speziellen Form der zur Zielposition führenden günstigen Fahrtroute ist jeweils ein individueller Schwellenwert für einzelne Abschnitte der Fahrtroute vorgebbar. Die Vorgabe erfolgt dabei vorteilhafterweise durch die Einrichtung, die über die digitale Straßenkarte zur Bestimmung einer günstigen Fahrtroute verfügt, bei einem Off-Board-Navigationssystem also durch einen fahrzeugexternen Verkehrsrechner.

Vorzugsweise ist ein Bordcomputer zur Steuerung der Abstandsbestimmungs/Vergleichseinrichtung vorgesehen, die vorzugsweise als Rechenprogramm ausgebildet ist. Besonders geeignet ist die Zielführungseinheit zur Zielführung innerhalb eines Off-Board-Navigationssystems, wenn diese zusätzlich mit einer Kommunikationseinrichtung zum Datenaustausch versehen ist. Durch die Kommunikationseinrichtung ist die Fahrtroute in Form von Wegpunkten durch das Off-Board-Navigationssystem an die Zielführungseinheit übermittelbar. Zweckmäßigerweise ist die Kommunikationseinrichtung als Mobilfunktelefon ausgebildet. Die Ausbildung der Eingabeeinrichtung als Tastatur erweist sich als universelle Lösung. Sehr klein und leicht unterzubringen ist die Ortspositionsermittlungseinrichtung, wenn diese ein Empfänger zum Empfang von Signalen für die Satellitennavigation ist. Mit der Erfindung wird vorgeschlagen, daß durch den Bordcomputer bei Verlassen der Fahrtroute die Anzeige eines vorzugsweise optischen Warnsignals insbesondere zusammen mit Fahrhinweisen auf dem Display der Anzeigeeinrichtung ausgebbar ist. Die Fahrhinweise können Detailinformationen bezüglich der Abweichungen von der vorgegebenen Fahrtroute enthalten. Selbstverständlich könnte das Warnsignal auch auf anderem Wege, z.B. akustisch, ausgegeben werden.

Anhand des in der Figür schematisch dargestellten Systems zur Zielführung eines Fahrzeugs mit einer Zielführungseinheit im Fahrzeug und einem externen Off-Board-Navigationssystem werden die Aspekte der Erfindung nachfolgend beispielhaft beschrieben.

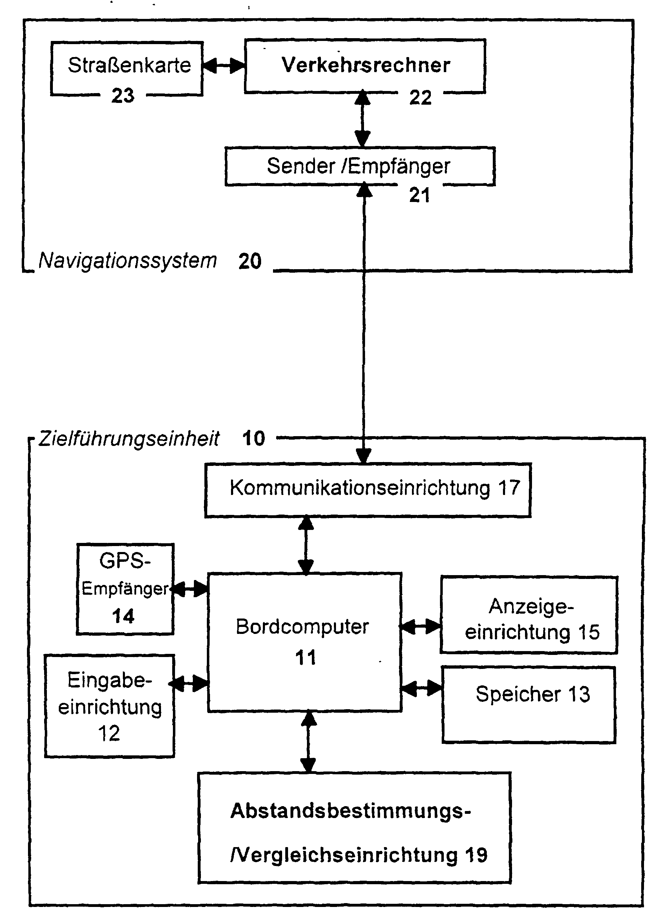

Das in der Figur dargestellte System zur Zielführung eines Fahrzeugs umfaßt eine im Fahrzeug installierte Zielführungseinheit 10. Die Zielführungseinheit 10 weist einen Bordcomputer 11 auf, durch den die übrigen Komponenten 12-19 der Zielführungseinheit 10 miteinander verbunden und steuerbar sind. Eine Eingabeeinrichtung 12 in Form einer Tastatur ermöglicht die Eingabe der Zielposition, beispielsweise des Straßennamens. Die angegebene Zielposition ist im Speicher 13 ablegbar und steht somit bei Bedarf abrufbar zur Verfügung. Zur Bestimmung der momentanen Ortsposition weist die Zielführungseinheit 10 einen Empfänger 14 eines Satellitennavigationssystems (z.B. GPS = Global Positioning System) auf, der ebenfalls mit dem Bordcomputer 11 datentechnisch verbunden ist. Bei Bedarf sind die aus den empfangenen Satellitensignalen fortlaufend bestimmbaren momentanen Ortspositionen durch den Bordcomputer 11 im Speicher 13 ablegbar. Im Speicher 13 ist darüber hinaus die anhand der momentanen Ortsposition und der eingegebenen Zielposition bestimmte günstige Fahrtroute in Form von Wegpunkten abgelegt, welche die geographischen Daten beinhalten. Wie Fig. 1 erkennen läßt, weist die Zielführungseinheit 10 eine Anzeigevorrichtung 15 auf, die mit einem optischen Display versehen ist, durch welche die Fahrtroute vom Bordcomputer 11 gesteuert teilweise oder vollständig zusammen mit Fahrhinweisen anzeigbar ist. Dabei ist es vorgesehen, die momentane Ortsposition des Fahrzeugs, beispielsweise farblich hervorgehoben, anzuzeigen. Die fortlaufende Bestimmung des linearen Abstands der momentanen Ortsposition von dem nächstfolgenden Wegpunkt der beiden Wegpunkte, zwischen denen sich das Fahrzeug momentan befindet, und den Vergleich mit einem vorgegebenen Minimalwert ermöglicht eine Abstandsbestimmungs-Nergleichseinrichtung 19, durch die außerdem ein Warnsignal auslösbar ist, und zwar dann, wenn der berechnete Abstand um einen vorgegebenen Schwellenwert größer als der Minimalwert ist. Zur differenzierteren Berücksichtigung beispielsweise der speziellen Form der zur Zielposition führenden günstigen Fahrtroute ist jeweils ein spezifischer Schwellenwert für einzelne Abschnitte der Fahrtroute vorgegeben. Aufgrund des Warnsignals ist durch den Bordcomputer 11 ein entsprechendes akustisches Signal für den Fahrer erzeugbar und/oder entsprechende Fahrhinweise über das optische Display der Anzeigeeinrichtung 15 ausgebbar. Der vorgegebene Minimalwert ist jeweils durch den aktuell ermittelten linearen Abstand ersetzbar, wenn der bisherige Minimalwert großer als dieser Abstand ist. Um den gerätetechnischen Aufwand der Zielführungseinheit 10 möglichst gering zu halten, ist diese mit einer Kommunikationseinrichtung 17, insbesondere ein Mobilfunktelefon, verbunden, durch die die datentechnische Verbindung zu einem außerhalb des Fahrzeugs angeordneten Off-Board-Navigationssystem 20 herstellbar ist. Die Fig.1 läßt erkennen, daß das Off-Board-Navigationssystem 20 zum Datenaustausch mit der Zielführungseinheit 10 mit einem Sender/Empfänger 21 versehen ist. Das Navigationssystem 20 enthält einen Verkehrsrechner 22, der Zugriff auf eine digitale Straßenkarte 23 sowie aktuelle Verkehrsinformationen hat.

Zur Durchführung der Zielführung des Fahrzeugs wird die Zielposition durch den Fahrer über die Tastatur der Eingabeeinrichtung 12 eingegeben. Die Zielposition wird zusammen mit der mittels des Empfängers 14 bestimmten momentanen Ortsposition des Fahrzeugs durch die Kommunikationseinrichtung 17 an den Verkehrsrechner 22 des Off-Board-Navigationssystems 20 übertragen. Anhand der digitalen Straßenkarte 23 bestimmt der Verkehrsrechner 22 dann eine günstige Fahrtroute zur vorgegebenen Zielposition. Diese Fahrtroute wird anschließend in Form von Wegpunkten an die Zielführungseinheit 10 rückübertragen und vom Bordcomputer 11 gesteuert im Speicher 13 abgelegt. Anhand der mittels des Empfängers 14 empfangenen Signale wird die momentane Ortsposition des Fahrzeugs bestimmt, so daß die Abstandsbestimmungs-/Vergleichseinrichtung 19 die beiden unmittelbar aufeinanderfolgenden Wegpunkte, zwischen denen sich das Fahrzeug momentan aufhält, bestimmen kann. Weiterhin werden der Abstandsbestimmungs-Nergleichseinrichtung 19 ständig die mittels Empfänger 14 fortlaufend ermittelten momentanen Ortspositionen des Fahrzeugs zur Verfügung gestellt. Die Abstandsbestimmungs-/Vergleichseinrichtung 19 berechnet daraus fortlaufend den linearen Abstand (Luftlinie) der momentanen Ortsposition von dem Wegpunkt, den das Fahrzeug als nächsten auf seiner Fahrtroute passieren soll, und vergleicht diesen mit einem vorgegebenen Minimalwert, der jeweils durch den berechneten Abstand ersetzt wird, wenn dieser berechnete Abstand größer als der Minimalwert ist. Durch die Abstandsbestimmungs-/Vergleichseinrichtung 19 wird dagegen ein Warnsignal ausgelöst, das ein Verlassen der vorgegebenen Fahrtroute signalisiert, wenn der berechnete lineare Abstand um einen für diesen Streckenabschnitt der Fahrtroute vorgegebenen Schwellenwert größer als der bisherige Minimalwert ist. Es ist selbstverständlich auch möglich, ausgelöst durch das Warnsignal eine neue Fahrtroute zu bestimmen und das Fahrzeug entlang dieser Route zur Zielposition zu führen, ohne den Fahrer explizit über die Falschfahrt zu informieren. Über den Schwellenwert läßt sich ferner die Anpassung des Verfahrens an den unter Umständen sehr komplizierten Fahrtroutenverlauf vornehmen. Dies ist z.B. sinnvoll, wenn aufgrund einer bogen- oder schleifenförmigen Strecke der Abstand zum nächsten Wegpunkt, also die geradlinige Verbindung zwischen der momentanen Fahrzeugposition und diesem Wegpunkt zwischenzeitlich wieder größer wird, obwohl sich die noch zurückzulegende Straßenstrecke zu diesem Wegpunkt fortlaufend verkürzt. Durch das Warnsignal wird der Bordcomputer 11 veranlaßt, ein entsprechendes Signal an den Fahrer auszugeben. Die Ausgabe kann einerseits akustisch in Form eines Warntons oder eines Sprachhinweises und andererseits optisch auf dem Display der Anzeigeeinrichtung 15 erfolgen, wobei der Fahrer insbesondere durch letztere beispielsweise zusätzliche Informationen über die Abweichung von der vorgegebenen Fahrtroute und Fahrhinweise von der Zielführungseinheit 10 erhalten kann. Bei einer alternativen Ausgestaltung der Erfindung ist die Abstandsbestimmungs-Nergleichseinrichtung 19 als Rechenprogramm ausgebildet, das vom Bordcomputer 11 aufrufbar ist.

## Patentansprüche

1. Verfahren zur sicheren Zielführung eines Fahrzeugs entlang einer zu einer vorgegebenen Zielposition führenden Fahrtroute, bei dem die momentane Ortsposition des Fahrzeugs fortlaufend ermittelt und eine Fahrtroute, die in Form von aufeinanderfolgenden Wegpunkten, die mindestens die geographischen Ortskoordinaten umfassen, bestimmt wird und dem Fahrer des Fahrzeugs in Form von Fahrhinweisen angezeigt wird, wobei ein Verlassen der vorgegebenen Fahrtroute signalisiert wird, sobald ein entsprechendes vorgegebenes Entscheidungskriterium erfüllt ist,
**dadurch gekennzeichnet**,
daß die Ermittlung der Ortsposition im Fahrzeug anhand von Daten oder Signalen erfolgt, die auf drahtlosem Wege an das Fahrzeug übermittelt werden daß fortlaufend der lineare Abstand der momentanen Ortsposition von dem Wegpunkt, den das Fahrzeug als nächsten auf seiner Fahrtroute passieren soll, berechnet und mit einem vorgegebenen Minimalwert verglichen wird,
daß der Minimalwert nach einem Vergleich jeweils durch den berechneten linearen Abstand ersetzt wird, wenn der bisherige Minimalwert größer als der lineare Abstand ist und
daß das Verlassen der vorgegebenen Fahrtroute signalisiert wird, wenn der berechnete Abstand um einen vorgegebenen Schwellenwert größer als der Minimalwert ist.

2. Verfahren nach Ansprüch 1,
**dadurch gekennzeichnet,**
daß die aktuelle Ortsposition des Fahrzeugs anhand von Daten oder Signalen ermittelt wird, die auf drahtlosem Wege an das Fahrzeug übertragen werden.

3. Verfahren nach einem der Ansprüche 1 oder 2,
**dadurch gekennzeichnet,**
daß die Fahrtroute durch ein Off-Board-Navigationssystem bestimmt und an das Fahrzeug übertragen wird.

4. Zielführungseinheit zur sicheren Zielführung eines Fahrzeugs, die das Verlassen einer ermittelten Fahrtroute selbständig erkennt und dann ein Warnsignal auslöst, mit einer Eingabeeinrichtung (12) zur Eingabe einer Zielposition, einer Ortspositionsermittlungseinrichtung zur Erfassung der momentanen Ortsposition, einer Fahrtroutenermittlungseinrichtung, ferner mit einem Speicher (13), in dem die Fahrtroute in Form von Wegpunkten, die mindestens die geographischen Ortskoordinaten umfassen, abgelegt ist, und mit einer Anzeigeeinrichtung (15) zur Anzeige von Fahrhinweisen,
**dadurch gekennzeichnet**,
daß die Ortspositionsermittlungseinrichtung auf die Verarbeitung von Daten oder Signalen zur Bestimmung der Ortsposition, die von außen an das Fahrzeug übertragen werden, eingerichtet ist,
daß zur fortlaufenden Bestimmung des linearen Abstands der momentanen Ortsposition von dem Wegpunkt, den das Fahrzeug als nächsten auf seiner Fahrtroute passieren soll, und zum Vergleich dieses Abstands mit einem vorgegebenen Minimalwert eine Abstandsbestimmungs-/Vergleichseinrichtung (19) vorgesehen ist, durch die ein Warnsignal auslösbar ist, wenn der berechnete lineare Abstand um einen vorgegebenen Schwellenwert größer als der Minimalwert ist und
daß der vorgegebene Minimalwert nach einem Vergleich jeweils durch den berechneten linearen Abstand ersetzt wird, wenn der bisherige Minimalwert größer als der berechnete lineare Abstand war.

5. Zielführungseinheit nach Anspruch 4,
**dadurch gekennzeichnet,**
daß ein Bordcomputer (11) zur Steuerung der Abstandsbestimmungs/Vergleichseinrichtung (19) vorgesehen ist.

6. Zielführungseinheit nach Anspruch 5,
**dadurch gekennzeichnet,**
daß die Abstandsbestimmungs-/Vergleichseinrichtung (19) als Rechenprogramm ausgebildet ist.

7. Zielführungseinheit nach Anspruch 4,
**dadurch gekennzeichnet,**
daß jeweils ein individueller Schwellenwert für einzelne Abschnitte der Fahrtroute vorgegeben ist.

8. Zielführungseinheit nach einem der Ansprüche 4 bis 7,
**dadurch gekennzeichnet,**
daß eine Kommunikationseinrichtung (17) zum Datenaustausch mit einem Off-Board-Navigationssystem (20) vorgesehen ist.

9. Zielführungseinheit nach Anspruch 8,
**dadurch gekennzeichnet,**
daß die Kommunikationseinrichtung (17) ein Mobilfunktelefon ist.

10. Zielführungseinheit nach einem der Ansprüche 4 bis 9,
**dadurch gekennzeichnet,**
daß die Eingabeeinrichtung (12) eine Tastatur ist.

11. Zielführungseinheit nach einem der Ansprüche 4 bis 10,
**dadurch gekennzeichnet,**
daß die Ortspositionsermittlungseinrichtung einen Empfänger (14) eines Satellitennavigationssystems aufweist.

12. Zielführungseinheit nach einem der Ansprüche 4 bis 11,
**dadurch gekennzeichnet,**
daß die Anzeigeeinrichtung (15) ein optisches Display aufweist.

13. Zielführungseinheit nach Anspruch 12,
**dadurch gekennzeichnet,**
daß das Warnsignal zusammen mit Fahrhinweisen durch die Anzeigeeinrichtung (15) optisch ausgebbar ist.

## Claims

1. Method for ensuring the reliable guidance of a vehicle along a driving route leading to a pre-determined destination position, in which method the current location of the vehicle is continuously detected, and a driving route which is determined in the form of successive route points including at least the geographical location co-ordinates and is displayed to the driver of the vehicle in the form of driving instructions, leaving the pre-determined driving route being signalled as soon as a corresponding pre-determined decision criterion is met,
**characterised in that**
the location is determined in the vehicle with the aid of data or signals which are transmitted to the vehicle by means of wireless communication, in that continuously the linear distance of the current location from the route point which the vehicle has to pass next on its driving route is calculated and compared with a pre-determined minimum value, in that the minimum value is replaced after a comparison respectively by the calculated linear distance if the previous minimum value is greater than the linear distance and
in that leaving the pre-determined driving route is signalled if the calculated distance is greater by a pre-determined threshold value than the minimum value.

2. Method according to claim 1, **characterised in that** the current location of the vehicle is detected with the aid of data or signals which are transmitted to the vehicle by means of wireless communication.

3. Method according to one of claims 1 or 2, **characterised in that** the driving route is determined by an off-board navigation system and transmitted to the vehicle.

4. Route guidance system for ensuring the reliable guidance of a vehicle which recognises automatically if a detected driving route has been left and then triggers a warning signal, having an input device (12) to enter a destination position, a location detection device to detect the current location, a driving route detection device, furthermore having a memory (13) in which the driving route is deposited in the form of route points which include at least the geographical location co-ordinates and having a display device (15) to display driving instructions,
**characterised in that**
the location detection device is adjusted to process data or signals for determining the location and which are transmitted from the exterior to the vehicle, in that, for continuously determining the linear distance of the current location from the route point which the vehicle must pass next on its driving route, and for comparing this distance with a pre-determined minimum value, a distance-determining/comparison device (19) is provided, through which a warning signal can be triggered when the calculated linear distance is greater by a pre-determined threshold value than the minimum value and, in that the pre-determined minimum value is replaced after a comparison respectively by the calculated linear distance if the previous minimum value was greater than the calculated linear distance.

5. Route guidance system according to claim 4, **characterised in that** an on-board computer (11) is provided to control the distance-determining/comparison device (19).

6. Route guidance system according to claim 5, **characterised in that** the distance-determining/comparison device (19) is configured as a computer program.

7. Route guidance system according to claim 4, **characterised in that** in each case an individual threshold value is preset for individual sections of the driving route.

8. Route guidance system according to one of claims 4 to 7, **characterised in that** a communication device (17) is provided for exchanging data with an off-board navigation system (20).

9. Route guidance system according to claim 8, **characterised in that** the communication device (17) is a mobile telephone.

10. Route guidance system according to one of claims 4 to 9, **characterised in that** the input device (12) is a keyboard.

11. Route guidance system according to one of claims 4 to 10, **characterised in that** the location detection device has a receiver (14) of a satellite navigation system.

12. Route guidance system according to one of claims 4 to 11, **characterised in that** the display device (15) has a visual display.

13. Route guidance system according to claim 12, **characterised in that** the warning signal can be emitted in a visual manner together with driving instructions by the display device (15).

## Revendications

1. Procédé pour guider de façon sûre un véhicule le long d'un itinéraire menant à une destination prédéfinie, dans lequel la position locale instantanée du véhicule est détectée de façon continue, et un itinéraire est déterminé sous forme de points de trajet successifs, qui comportent au moins les coordonnées locales géographiques, et est affiché au conducteur du véhicule sous forme d'indications de marche, le fait de quitter l'itinéraire prédéfini étant signalé aussitôt qu'un critère de décision prédéfini correspondant est rempli,
caractérisé en ce que la détermination de la position locale est effectuée dans le véhicule en référence à des données ou des signaux qui sont transmis au véhicule par des voies sans fil, en ce que, de façon continue, la distance linéaire de la position locale instantanée du point de trajet, que doit passer le véhicule comme le plus proche sur son itinéraire, est calculée et est comparée à une valeur minimale prédéfinie, en ce que la valeur minimale, après une comparaison, est remplacée, à chaque fois, par la distance linéaire calculée lorsque la valeur minimale jusqu'à présent est plus grande que la distance linéaire, et en ce que le fait de quitter l'itinéraire prédéfini est signalé lorsque la distance calculée est plus grande, d'une valeur de seuil prédéfinie, que la valeur minimale.

2. Procédé selon la revendication 1,
caractérisé en ce que la position locale actuelle du véhicule est détectée en référence à des données ou signaux qui sont transmis au véhicule par des voies sans fil.

3. Procédé selon une des revendications 1 ou 2,
caractérisé en ce que l'itinéraire est déterminé par un système de navigation externe et est transmis au véhicule.

4. Unité de guidage pour guider de façon sûre un véhicule, qui reconnaît automatiquement le fait de quitter un itinéraire détecté et, alors, déclenche un signal d'alarme, comportant un dispositif d'entrée (12) pour entrer une destination, un dispositif de détermination de position locale pour détecter la position locale instantanée, un dispositif de détermination d'itinéraire, comportant de plus une mémoire (13), dans laquelle l'itinéraire est mémorisé sous forme de points de trajet qui comportent au moins les coordonnées locales géographiques, et un dispositif d'affichage (15) pour afficher des indications de marche,
caractérisée en ce que le dispositif de détection de position locale est destiné au traitement de données ou signaux pour déterminer la position locale, qui sont transmis au véhicule de l'extérieur, en ce que, pour la détermination continue de la distance linéaire de la position locale instantanée du point de trajet, que le véhicule doit passer comme le plus proche sur son itinéraire, et pour comparer cette distance à une valeur minimale prédéfinie, il est prévu un dispositif de détermination de distance / comparaison (19), grâce auquel un signal d'alarme peut être déclenché lorsque la distance linéaire calculée est plus grande, d'une valeur de seuil prédéfinie, que la valeur minimale, et en ce que la valeur minimale prédéfinie, après une comparaison, est remplacée, à chaque fois, par la distance linéaire calculée lorsque la valeur minimale jusqu'à présent est plus grande que la distance linéaire calculée.

5. Unité de guidage selon la revendication 4,
caractérisée en ce qu'un ordinateur de bord (11) est prévu pour commander le dispositif de détermination de distance / comparaison (19).

6. Unité de guidage selon la revendication 5,
caractérisée en ce que le dispositif de détermination de distance / comparaison (19) est réalisé comme programme de calcul.

7. Unité de guidage selon la revendication 4,
caractérisée en ce que, à chaque fois, il est prédéfini une valeur de seuil individuelle pour des tronçons individuels de l'itinéraire.

8. Unité de guidage selon une des revendications 4 à 7,
caractérisée en ce qu'il est prévu un dispositif de communication (17) pour l'échange de données avec un système de navigation externe (20).

9. Unité de guidage selon la revendication 8,
caractérisée en ce que le dispositif de communication (17) est un radiotéléphone mobile.

10. Unité de guidage selon une des revendications 4 à 9,
caractérisée en ce que le dispositif d'entrée (12) est un clavier.

11. Unité de guidage selon une des revendications 4 à 10,
caractérisée en ce que le dispositif de détermination de position locale présente un récepteur (14) d'un système de navigation par satellites.

12. Unité de guidage selon une des revendications 4 à 11,
caractérisée en ce que le dispositif d'affichage (15) présente un affichage optique.

13. Unité de guidage selon la revendication 12,
caractérisée en ce que le signal d'alarme est émis de façon optique par le dispositif d'affichage (15) en même temps que des indications de marche.
